(19) Europäisches Patentamt
European Patent Office
Office européen des brevets

(11) **EP 2 647 493 B1**

(12) **EUROPEAN PATENT SPECIFICATION**

(45) Date of publication and mention of the grant of the patent:
**01.08.2018 Bulletin 2018/31**

(21) Application number: **12749561.2**

(22) Date of filing: **21.02.2012**

(51) Int Cl.:
*B29D 30/56* $^{(2006.01)}$   *B29D 30/58* $^{(2006.01)}$

(86) International application number:
**PCT/JP2012/054035**

(87) International publication number:
**WO 2012/115069 (30.08.2012 Gazette 2012/35)**

(54) **TIRE MANUFACTURING METHOD**

REIFENHERSTELLUNGSVERFAHREN

PROCÉDÉ DE FABRICATION DE PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.02.2011 JP 2011036193**

(43) Date of publication of application:
**09.10.2013 Bulletin 2013/41**

(73) Proprietor: **Kabushiki Kaisha Bridgestone Chuo-ku, Tokyo 104-8340 (JP)**

(72) Inventor: **KAWAGOE, Kenji
Kodaira-shi
Tokyo 187-8531 (JP)**

(74) Representative: **Lamb, Martin John Carstairs
Marks & Clerk LLP
90 Long Acre
London WC2E 9RA (GB)**

(56) References cited:
**EP-A2- 0 335 694        EP-A2- 0 403 443
WO-A1-2010/024827   WO-A1-2010/044345
JP-A- 5 154 941          JP-A- 2001 294 019
US-A- 3 283 795          US-A- 3 753 821
US-A- 4 239 075**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a method for manufacturing a tire using a precured (vulcanized) tread having a mounting surface formed flat.

BACKGROUND ART

There is a known tire manufacturing method in which a precured tread is applied to the tread mounting surface of a base tire (see Patent Document 1, for instance).
Known as a precured tread such as mentioned above is one formed into a strip which has a surface (back surface) formed as a flat mounting surface (curvature: 0) to be cure-bonded to the tread mounting surface of the base tire and the other surface formed with a tread pattern (see Patent Document 2, for instance) .
Also, known as a precured tread such as mentioned above is one formed into a strip which has a surface (back surface) formed as a curved mounting surface corresponding to the curvatures of the tread mounting surface of the base tire, which is cure-bonded to the tread mounting surface of the base tire, and the other surface formed with a tread pattern (see Patent Document 3, for instance).

PRIOR ART DOCUMENT

Patent Document

Patent Document 1: Japanese Unexamined Patent Application Publication No. 8-258179
Patent Document 2: Japanese Unexamined Patent Application Publication No. 2008-120044
Patent Document 3: Japanese Unexamined Patent Application Publication No. 2000-79641

Reference is also made to WO2010/024827, EP-A-0403443, US3283795, US4239075 and WO2010/044345.

SUMMARY OF THE INVENTION

Problem to be Solved by the Invention

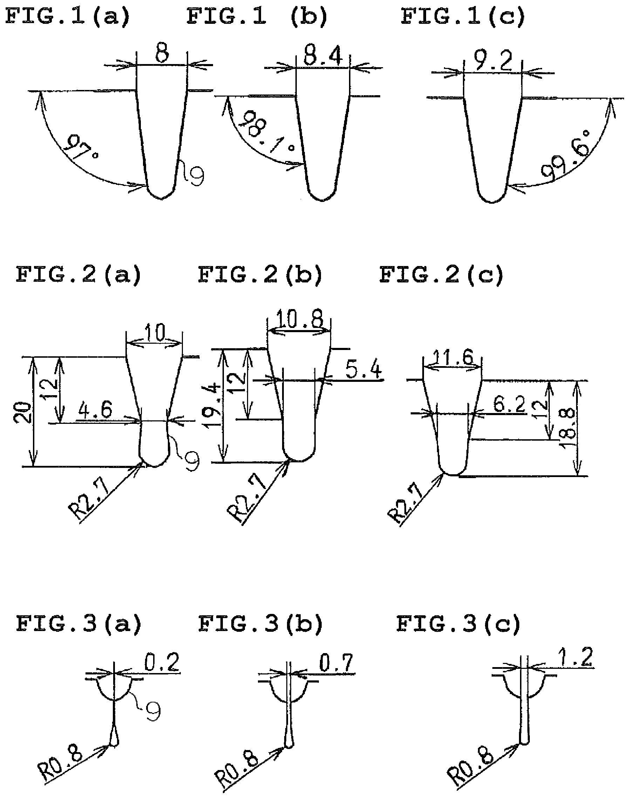

When a precured tread having a mounting surface formed flat as disclosed in Patent Document 2 is applied to the the tread mounting surface of a base tire having curvatures in the axial and circumferential directions of a tire, the mounting surface of the precured tread will be bent along the curvatures of the tread mounting surface of the base tire. And this will result in deformations of the grooves in the tread pattern. In other words, the grooves in the tread pattern of the precured tread when the tread is mounted on the base tire to form a tire will not satisfy their design specifications even if they do satisfy them when the mounting surface of the tread is in a flat state.
However, the conventional method of tire manufacture using the above-described precured tread goes as follows: For example, when a tire having a tread pattern with grooves of design values as shown in B of FIGS. 1 to 3 is to be manufactured, a precured tread having a tread pattern with grooves of design values as shown in B of FIGS. 1 to 3 is fabricated. And then the tire is manufactured by wrapping the precured tread about the tread mounting surface of a base tire and cure-bonding the mounting surface of the tread to the tread mounting surface of the base tire. This, however, has raised a problem of the grooves in the tread pattern of the tire manufactured becoming the grooves of values different from the design values as shown in C of FIGS. 1 to 3, thus failing to produce a tire exhibiting a desired design performance.
On the other hand, when a precured tread with the mounting surface formed in correspondence to the curvatures of the tread mounting surface of the base tire is used as disclosed in Patent Document 3, there will be reduced effects of deformation of the grooves resulting from the application of the precured tread on the tread mounting surface of the base tire. In this case, however, some additional restrictions may apply to the processing conditions of the base tire, or an increased amount of rubber may be required for the precured tread. Thus results a problem of disadvantage in the processing cost or material cost.
The present invention has been made to solve the above-described problems, and an object thereof is to realize a method of manufacturing at a low cost a tire that can exhibit a desired design performance using a precured tread having a mounting surface formed flat.

Means for Solving the Problem

In one aspect of the present invention according to claim 1, a tire manufacturing method includes the steps of fabricating a base tire formed with a tread mounting surface having curvatures in the axial and circumferential directions of the tire, fabricating a precured tread having a mounting surface formed flat to be applied to the tread mounting surface of the base tire, wrapping the precured tread around the base tire, and cure-bonding the base tire and the precured tread together. The precured tread has grooves in a tread pattern surface which is opposite from the mounting surface thereof. And the precured tread is formed with the circumferential and axial lengths of the grooves formed shorter than desired design values, based on differences in the circumferential and axial lengths between when the mounting surface of the tread applied to the base tire is curved along the respective curvatures of the tread mounting surface of the base tire and when the mounting surface of the tread is in a flat state. Accordingly, a tire exhibiting a desired design performance can be manufactured at a low cost using a precured tread having a mounting surface formed flat.

The precured tread is such that the grooves in the precured tread in a flat state have each a shape of groove bottom surface identical to desired design values, with the curved cross section of the groove bottom surface being closer to the mounting surface of the tread. Also, the width dimension $W_{01}$ of the circumferential grooves extending along the circumference of a tire is of a value calculated by the following equation (1). The width dimension $W_{02}$ of the lateral grooves extending in a direction intersecting the circumferential grooves and connecting thereto at each end thereof is of a value calculated by the following equation (2). And the depth of the grooves is of a value calculated by the following equation (3).

$$W_{01} = W1 - V1/N1 \qquad\qquad (1)$$

where W1 is a design value for the width dimension of the circumferential grooves in the precured tread, V1 is a variation in the axial length of the precured tread between a flat state and a mounted state thereof, and N1 is a number of the circumferential grooves in the precured tread.

$$W_{02} = W2 - V2/N2 \qquad\qquad (2)$$

where W2 is a design value for the width dimension of the lateral grooves in the precured tread, V2 is a variation in the circumferential length of the precured tread between a flat state and a mounted state thereof, and N2 is a number of the lateral grooves extending and connecting at each end thereof to the circumferential grooves in the precured tread.

$$D_0 = D + V \qquad\qquad (3)$$

where D is a design value for the depth dimension of the grooves in the precured tread and V is a variation in the depth of the grooves in the precured tread between a flat state and a mounted state thereof.

By the use of a precured tread in a flat state which has grooves formed based on these values, a tire exhibiting a desired design performance can be manufactured at a low cost.

Also, the precured tread is such that a plurality of circumferential grooves extending along the circumference of the tire are provided, and the circumferential grooves located in axially outer positions of the tire have larger above-mentioned difference than the circumferential grooves located in axially central positions of the tire. Therefore, even if some circumferential grooves are located on the axially outer sides of a tire where the curvature in the axial direction of the tire is greater, a tire exhibiting a desired design performance can be manufactured at a low cost.

BRIEF DESCRIPTION OF THE DRAWINGS

FIG. 1A shows a groove in a tread pattern of a precured tread for use in the present invention.
FIG. 1B shows a groove in a tread pattern of a tire obtained according to an embodiment of the present invention (= a groove in a tread pattern of a conventional precured tread) . And FIG. 1C shows a groove in a tread pattern of a conventional tire.
FIG. 2A shows a groove in a tread pattern of a precured tread for use in the present invention. FIG. 2B shows a groove in a tread pattern of a tire obtained according to an embodiment of the present invention (= a groove in a tread pattern of a conventional precured tread) . And FIG. 2C shows a groove in a tread pattern of a conventional tire. FIG. 3A shows a groove in a tread pattern of a precured tread for use in the present invention. FIG. 3B shows a groove in a tread pattern of a tire obtained according to an embodiment of the present invention (= a groove in a tread pattern of a conventional precured tread) . And FIG. 3C shows a groove in a tread pattern of a conventional tire.

FIG. 4 is a cross-sectional view of a tire obtained according to an embodiment of the invention.

FIG. 5 is a cross-sectional view of a base tire and a tread in a method according to an embodiment of the invention.

FIG. 6 is a perspective illustration of a base tire and a tread in a method according to an embodiment of the invention.

BEST MODE FOR CARRYING OUT THE INVENTION

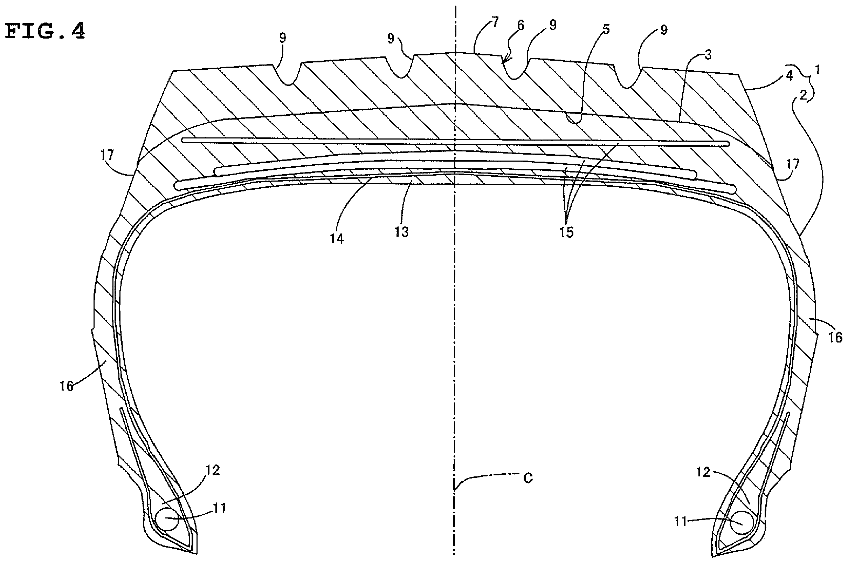

As shown in FIG. 4, a tire 1 obtained according to preferred embodiments is composed of a base tire 2 and a precured tread 4 (hereinafter referred to as PCT (precured tread)) to be applied to the tread mounting surface 3 of the base tire 2.

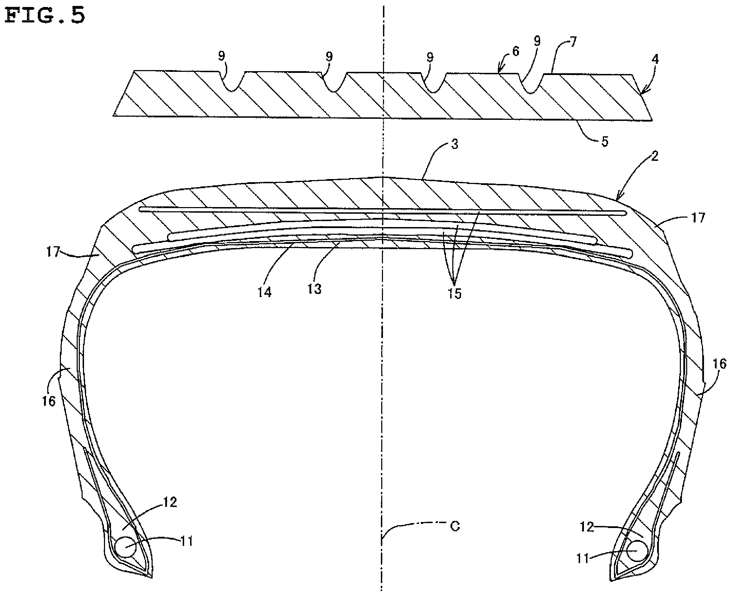

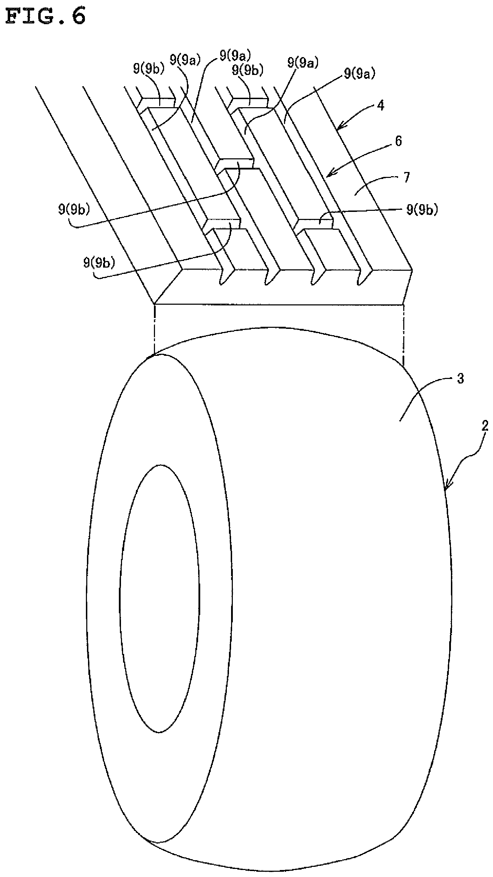

As shown in FIG. 5 and FIG. 6, the base tire 2 is a precured component part of a tire which is formed in a tire shape without the tread. A precured component part of a tire which is formed in a tire shape without the tread means a precured component part of a tire having a general tire structure without the tread.

The base tire 2 can be a used base tire or a new base tire. A used base tire 2 has a tread mounting surface (buffed surface) 3 on which to apply a PCT 4 after the worn tread rubber of a used tire has been cut off. It is a precured component part of a tire formed into a tire shape without the tread to be used again. A new base tire 2, just as the term indicates, is a new precured component part of a tire newly fabricated into a tire shape without the tread, yet having a tread mounting surface 3. The new base tire 2 is fabricated by the use of a not-shown curing mold.

The tread mounting surface 3 of the base tire 2 is formed into a cylindrical peripheral surface having a predetermined width. It is curved along the axial (width) direction of the tire such that the cross-sectional middle portion thereof (portion where the equator line C of the tire passes) protrudes above the cross-sectionally side portions thereof. That is, the tread mounting surface 3 of the base tire 2 is formed with curvatures along both the width and circumference of the tire.

Normally, a tire is manufactured by curing (vulcanizing) in a curing mold a green tire which is composed of such member parts as bead wires, bead fillers, innerliner, carcass, belts, sidewalls, shoulders, and tread. In contrast to this, a tire 1 obtained according the embodiments of the invention is manufactured by combining a base tire 2 with a PCT 4 which is fabricated separately. As for the base tire 2, a new base tire 2 without the tread is fabricated by curing in a curing mold a green base tire which is composed of such member parts as bead wires 11, bead fillers 12, innerliner 13, carcass 14, belts 15, sidewalls 16, and shoulders 17. Or a used base tire 3, which is cured, is formed with a tread mounting surface 3 by removing the tread portion from a used tire which consists of ordinary tire component members as described above.

As shown in FIGS. 5 and 6, the PCT 4 is formed into a strip shape having a width dimension corresponding to the width (tire width) of the tread mounting surface 3, which is the peripheral surface of the base tire 2 formed in a tire shape without tread unlike the above-mentioned ordinary tire, and a length dimension corresponding to the circumferential length of the peripheral surface of the base tire 2.

The PCT 4 has one of the surfaces of the strip formed as a flat surface, which is the mounting surface 5 to be applied to the tread mounting surface 3 of the base tire 2, and the other thereof formed as a tread pattern surface 7 having a tread pattern 6 with grooves 9 therein. It is formed such that the shape of the grooves 9 in the tread pattern 6 is different from the design values when the mounting surface 5 is flat (curvature: 0) (hereinafter referred to as "in a flat state"), whereas it is equal to the design values when the mounting surface 5 is wrapped around the tread mounting surface 3 of the base tire 2 and cure-bonded thereto, that is, when the PCT 4 is mounted on the base tire 2 and thus curved along the curvatures of the tread mounting surface 3 of the base tire 2 (hereinafter referred to as "in a mounted state").

In other words, the PCT 4 used is one having the circumferential and axial lengths of the grooves 9 formed shorter than desired design values, based on differences in the circumferential and axial lengths between when the mounting surface 5 applied to the base tire 2 is curved along the curvatures of the tread mounting surface 3 of the base tire 2 in a mounted state and when the mounting surface 5 is flat in a flat state.

In the fabrication of the PCT 4, for instance, an uncured tread is first formed by a not-shown extruder to have both of the opposing surfaces of the strip formed into flat surfaces parallel to each other and then the uncured tread is sent to a not-shown curing mold in which it is cure-molded. For example, the PCT 4 is fabricated using a curing mold which is equipped with a flat press plate for forming one surface of the uncured tread strip into a flat mounting surface and a patterned mold for forming the other surface of the uncured tread strip into a surface with a tread pattern.

According to the preferred embodiments, when a tire 1 having a tread pattern 6 with grooves 9 of design values as shown in B of FIGS. 1 to 3 is to be manufactured, for example, a PCT 4 in a flat state having a tread pattern 6 with grooves 9 of values different from the design values as shown in A of FIGS. 1 to 3 is first fabricated. Then the PCT 4 is wrapped around the tread mounting surface 3 of the base tire 2, and the mounting surface 5 is cure-bonded to the tread mounting surface 3 of the base tire 2, thus forming the tire 1. Therefore, the tire 1 exhibiting a desired design performance can be manufactured with the grooves 9 in the tread pattern 6 as shown in B of FIGS. 1 to 3 becoming the grooves 9 as per the design values. Note that the unit of numerical values representing the width dimension and depth dimension of the grooves 9 and the radius dimension R of the arc-shaped groove bottoms in FIGS. 1 to 3 is mm.

More specifically, a PCT 4 in a flat state having grooves 9 as described below is fabricated.

For the PCT 4 in a flat state, it has been decided that the shape of the groove bottom surfaces of the grooves 9 in the tread pattern 6, which are cross-sectionally curved closer to the mounting surface 5, are identical to the design values. That is, as shown in FIGS. 2 and 3, the arc radius dimension R of the groove bottom surface (see FIG. 2A and FIG. 3A) are the same as the design values (see FIG. 2B and FIG. 3B).

It has been found in an experiment that there occurs substantially no change in the arc radius dimension R of the groove bottom surface of the grooves 9 between when the PCT 4 is in a flat state and when it is in a mounted state. In the present embodiments, therefore, the shape employed for the groove bottom surface of the PCT 4 in a flat state is identical to the design values.

Further, for the PCT 4 in a flat state, the width dimension $W_{01}$ employed for the circumferential grooves 9 (9a) extending along the circumference of a tire (see FIG. 6) is of a value calculated by the following equation (1):

$$W_{01} = W1 - V1/N1 \qquad (1)$$

where W1 is a design value for the width dimension of the circumferential grooves in the precured tread, V1 is a variation in the axial length of the precured tread between a flat state and a mounted state thereof, and N1 is the number of the circumferential grooves in the precured tread.

For example, when the groove 9 in FIG. 1 is a circumferential groove 9 (9a), a PCT 4 in a flat state having a width dimension $W_{01}$ of 8 mm of the circumferential groove 9 (9a) (see FIG. 1A) is fabricated if there is one circumferential groove 9 (9a), the design value is 8.4 mm (see FIG. 1B), and the variation is 4 mm.

The V1 above is determined by tire size. Therefore, if the tire size, the number N1 of the circumferential grooves 9 (9a), and the design value W1 are known, the width dimension $W_{01}$ of the circumferential groove 9 (9a) of the PCT 4 in a flat state can be calculated based on those values.

Further, for the PCT 4 in a flat state, the width dimension $W_{02}$ employed for the lateral grooves 9 (9b) extending in a direction intersecting the circumferential grooves 9 (9a) and connecting thereto at each end thereof (see FIG. 6) is of a value calculated by the following equation (2):

$$W_{02} = W2 - V2/N2 \qquad (2)$$

where W2 is a design value for the width dimension of the lateral grooves in the precured tread, V2 is a variation in the circumferential length of the tread pattern surface 7 of the precured tread between a flat state and a mounted state thereof, and N2 is the number of the lateral grooves extending and connecting at each end thereof to the main grooves in the precured tread.

The V2 above is determined by tire size. Therefore, if the tire size, the number N2 of the lateral grooves 9 (9b), and the design value W2 are known, the width dimension $W_{02}$ of the lateral grooves 9 (9b) of the PCT 4 in a flat state can be calculated based on those values.

Further, for the PCT 4 in a flat state, the depth dimension $D_0$ employed for the grooves 9 is of a value calculated by the following equation:

$$D_0 = D + V \qquad (3)$$

where D is a design value for the depth dimension of the grooves in the precured tread and V is a variation in the depth of the grooves in the precured tread between a flat state and a mounted state thereof.

For example, as shown in FIG. 2, in order to manufacture a tire having the depth of the grooves 9 equaling the design value D of 19.4 mm (see FIG. 2B), a PCT 4 in a flat state having the depth dimension of 20 mm of the grooves is fabricated as shown in FIG. 2A.

The variation V in the depth of the grooves 9 is determined by tire size. Therefore, if the tire size and the design value D are known, the depth dimension $D_0$ of the grooves 9 of the PCT 4 in a flat state can be calculated based on those values.

It is to be noted that with $W_{02}$, $W_{01}$, and $D_0$ determined, the inclination angle of the groove walls of the grooves 9 is also determined (see FIG. 1). Also, V1/N1 in the equation (1) and V2/N2 in the equation (2) basically mean that the variation in the surface (tread pattern surface 7) length between a flat state and a mounted state of the precured tread is equally divided by the number of grooves 9 for the width dimension of the groove 9.

As per the above description, a PCT 4 having the grooves 9 of the R, $W_{02}$, $W_{01}$, and $D_0$ dimensions in a flat state thereof (see A of FIGS. 1 to 3) is fabricated. Then the PCT 4 is wrapped around the tread mounting surface 3 of a base tire 2, and the mounting surface 5 thereof is cure-bonded to the tread mounting surface 3 of the base tire 2, thus forming a tire. As a result, the shape of the grooves 9 in the tread pattern as shown in B of FIGS. 1 to 3 becomes that of the grooves 9 as per design values, so that a tire exhibiting a desired design performance can be manufactured.

Also, with the PCT 4, the circumferential grooves located on the axially outer sides of a tire show greater differences in the circumferential length and the axial length between when the mounting surface 5 thereof applied to the base tire 2 is curved along the curvatures of the tread mounting surface 3 of the base tire 2 (in a mounted state) and when it is flat (in a flat state) than the circumferential grooves located on the axially central side of the tire. Therefore, even if some circumferential grooves are located on the axially outer sides of a tire where the curvature in the axial direction of the tire is greater, a tire exhibiting a desired design performance can be manufactured at a low cost.

Also, in the embodiments of the present invention, a PCT 4 having a mounting surface 5 formed flat is used. Accordingly, compared with a PCT having a mounting surface so formed as to correspond to the curvatures of the tread mounting surface as disclosed in Patent Document 3, less restrictions will apply to the processing conditions of the base tire 2 and therefore the amount of rubber to be used for the PCT 4 can be reduced. This provides advantage in both the processing cost and material cost, making it possible to manufacture a tire exhibiting a desired design performance at a low cost.

More specifically, in the manufacture of a tire 1 using the above-described PCT 4, a not-shown cure-bonding rubber, called cushion rubber, is placed on the tread mounting surface 3 of a base tire 2. Then the PCT 4 is wrapped over the cure-bonding rubber, with the circumferential ends of the PCT 4 butted against each other. And the circumferential ends of the PCT 4 are fixed to the base tire 2 using not-shown fixing means such as staples. Now the tire prior to bonding, with the PCT 4 wrapped over the tread mounting surface 3 of the base tire 2, is placed inside a not-shown curing space called the curing can, where the cure-bonding rubber is cured. Thus, the mounting surface 5 of the PCT 4 and the tread mounting surface 3 of the base tire 2 are cure-bonded to the cure-bonding rubber. As a result, a tire 1 with the PCT 4 bonded to the tread mounting surface 3 of the base tire 2 is manufactured.

Description of Reference Numerals

1    tire
2    base tire
3    tread mounting surface
4    PCT (precured tread)
5    mounting surface
6    tread pattern
7    tread pattern surface
9    groove

**Claims**

1. A tire manufacturing method comprising the steps of:

    fabricating a base tire (2) formed with a tread mounting surface (3) having curvatures in axial and circumferential directions of the tire;
    fabricating a precured tread (4) having a mounting surface (5) formed flat to be applied to the tread mounting surface (3) of the base tire (2);
    wrapping the precured tread (4) around the base tire (2) ; and
    cure-bonding the base tire (2) and the precured tread (4) together,
    wherein the precured tread (4) has grooves (9) in a tread pattern surface (7) thereof which is opposite from the mounting surface (5) thereof, and the precured tread (4) is formed with circumferential and axial lengths of the grooves (9) formed shorter than desired design values, based on differences in the circumferential and axial lengths between when the mounting surface (5) of the tread applied to the base tire (2) is curved along respective curvatures of the tread mounting surface (3) of the base tire (2) and when the mounting surface (5) of the tread is in a flat state, wherein

the grooves (9) in the precured tread (4) in a flat state have each a shape of groove bottom surface identical to desired design values, a curved cross section of the groove bottom surface being closer to the mounting surface (5) of the tread, wherein the width dimension $W_{01}$ of circumferential grooves (9) extending along a circumference of a tire is of a value calculated by the following equation (1), the width dimension $W_{02}$ of lateral grooves (9b) extending in a direction intersecting the circumferential grooves (9a) and connecting thereto at each end thereof is of a value calculated by the following equation (2), and a depth $D_0$ of the grooves (9) is of a value calculated by the following equation (3) :

$$W_{01} = W1 - V1/N1 \qquad\qquad (1)$$

where W1 is a design value for width dimension of the circumferential grooves (9a) in the precured tread (4), V1 is a variation in axial length of the precured tread (4) between a flat state and a mounted state thereof, and N1 is a number of circumferential grooves (9a) in the precured tread (4),

$$W_{02} = W2 - V2/N2 \qquad\qquad (2)$$

where W2 is a design value for width dimension of the lateral grooves (9b) in the precured tread (4), V2 is a variation in circumferential length of the precured tread (4) between a flat state and a mounted state thereof, and N2 is a number of lateral grooves (9b) extending and connecting at each end thereof to the circumferential grooves (9a) in the precured tread (4),

$$D_0 = D + V \qquad\qquad (3)$$

where D is a design value for depth dimension of the grooves (9) in the precured tread (4) and V is a variation in depth of the grooves (9) in the precured tread (4) between a flat state and a mounted state thereof, and wherein a plurality of circumferential grooves (9a) extending along the circumference of the tire are provided, and the circumferential grooves (9a) located in axially outer positions of the tire have larger said difference than the circumferential grooves (9a) located in axially central positions of the tire.

## Patentansprüche

1. Reifenherstellungsverfahren, das die folgenden Schritte umfasst:

Fertigen eines Grundreifens (2), der mit einer Laufflächen-Anbringungsfläche (3) geformt ist, die Krümmungen in Axial- und Umfangsrichtung des Reifens aufweist,
Fertigen einer vorvulkanisierten Lauffläche (4), die eine Anbringungsfläche (5) aufweist, die flach geformt ist, um auf die Laufflächen-Anbringungsfläche (3) des Grundreifens (2) aufgebracht zu werden,
Wickeln der vorvulkanisierten Lauffläche (4) um den Grundreifen (2),
Vulkanisationsverbinden des Grundreifens (2) und der vorvulkanisierten Lauffläche (4) miteinander,
wobei die vorvulkanisierte Lauffläche (4) Rillen (9) in einer Laufflächen-Profilfläche (7) derselben aufweist, die zu der Anbringungsfläche (5) derselben entgegengesetzt ist, und die vorvulkanisierte Lauffläche (4) so geformt ist, dass Umfangs- und Axiallängen der Rillen (9) kürzer geformt sind als gewünschte Entwurfswerte, auf der Grundlage von Differenzen bei den Umfangs- und Axiallängen zwischen, wenn die Anbringungsfläche (5) der auf den Grundreifen (2) aufgebrachten Lauffläche entlang jeweiliger Krümmungen der Laufflächen-Anbringungsfläche (3) des Grundreifens (2) gekrümmt ist, und, wenn sich die Anbringungsfläche (5) der Lauffläche in einem flachen Zustand befindet, wobei
die Rillen (9) in der vorvulkanisierten Lauffläche (4) in einem flachen Zustand jeweils eine Form einer Rillensohlenfläche, identisch mit gewünschten Entwurfswerten, haben, wobei ein gekrümmter Querschnitt der Rillensohlenfläche der Anbringungsfläche (5) der Lauffläche näher ist, wobei die Breitenabmessung $W_{01}$ von umlaufenden Rillen (9), die sich entlang eines Umfangs eines Reifens erstrecken, einen Wert hat, der durch die folgende Gleichung (1) berechnet wird, die Breitenabmessung $W_{02}$ von seitlichen Rillen (9b), die sich in einer Richtung erstrecken, welche die umlaufenden Rillen (9a) schneidet, und an jedem Ende derselben damit verbunden sind, einen Wert hat, der durch die folgende Gleichung (2) berechnet wird, und eine Tiefe $D_0$ der Rillen (9) einen Wert hat, der durch die folgende Gleichung (3) berechnet wird:

$$W_{01} = W1 - V1/N1 \qquad (1)$$

wobei W1 ein Entwurfswert für die Breitenabmessung der umlaufenden Rillen (9a) in der vorvulkanisierten Lauffläche (4) ist, V1 eine Variation bei der Axiallänge der vorvulkanisierten Lauffläche (4) zwischen einem flachen Zustand und einem angebrachten Zustand derselben ist und N1 eine Anzahl von umlaufenden Rillen (9a) in der vorvulkanisierten Lauffläche (4) ist,

$$W_{02} = W2 - V2/N2 \qquad (2)$$

wobei W2 ein Entwurfswert für die Breitenabmessung der seitlichen Rillen (9b) in der vorvulkanisierten Lauffläche (4) ist, V2 eine Variation bei der Umfangslänge der vorvulkanisierten Lauffläche (4) zwischen einem flachen Zustand und einem angebrachten Zustand derselben ist und N2 eine Anzahl von seitlichen Rillen (9b) ist, die sich an jedem Ende derselben erstrecken und mit den umlaufenden Rillen (9a) in der vorvulkanisierten Lauffläche (4) verbinden,

$$D_0 = D + V \qquad (3)$$

wobei D ein Entwurfswert für die Tiefenabmessung der Rillen (9) in der vorvulkanisierten Lauffläche (4) ist und V eine Variation bei der Tiefenabmessung der Rillen (9) in der vorvulkanisierten Lauffläche (4) zwischen einem flachen Zustand und einem angebrachten Zustand derselben ist und wobei mehrere umlaufende Rillen (9a), die sich entlang des Umfangs des Reifens erstrecken, bereitgestellt werden und die umlaufenden Rillen (9a), die in in Axialrichtung äußeren Positionen des Reifens angeordnet sind, eine größere Differenz aufweisen als die umlaufenden Rillen (9a), die in in Axialrichtung mittigen Positionen des Reifens angeordnet sind.

**Revendications**

1. Procédé de fabrication d'un bandage pneumatique, comprenant les étapes ci-dessous :

fabrication d'un bandage pneumatique de base (2) comportant une surface de montage de la bande de roulement (3) avec des courbures dans des directions axiale et circonférentielle du bandage pneumatique ;
fabrication d'une bande de roulement prévulcanisée (4) comportant une surface de montage (5) de forme plate en vue de son application sur la surface de montage de la bande de roulement (3) du bandage pneumatique de base (2) ;
enroulement de la bande de roulement prévulcanisée (4) autour du bandage pneumatique de base (2) ; et
liaison par vulcanisation du bandage pneumatique de base (2) et de la bande de roulement prévulcanisée (4) ;
dans lequel la bande de roulement prévulcanisée (4) comporte des rainures (9) dans une surface de sculpture de la bande de roulement (7) opposée à sa surface de montage (5), la bande de roulement prévulcanisée (4) étant formée avec des longueurs circonférentielles et axiales de rainures (9) plus courtes que les valeurs de conception voulues, sur la base de différences des longueurs circonférentielle et axiale entre le moment où la surface de montage (5) de la de la bande de roulement dans un état appliqué sur le bandage pneumatique de base (2), est courbée le long des courbures respectives de la surface de montage de la bande de roulement (3) du bandage pneumatique de base (2), et celui où la surface de montage (5) de la bande de roulement se trouve dans un état plat,
dans lequel les rainures (9) dans la bande de roulement prévulcanisée (4) dans un état plat ont chacune une forme de la surface de fond de rainure identique aux valeurs de conception voulues, une section transversale courbée de la surface du fond de rainure étant plus proche de la surface de montage (5) de la bande de roulement, dans lequel la dimension de largeur $W_{01}$ de rainures circonférentielles (9) s'étendant le long d'une circonférence du bandage pneumatique a une valeur calculée par l'équation ci-dessous (1), la dimension de largeur $W_{02}$ de rainures latérales (9b) s'étendant dans une direction coupant les rainures latérales (9a) et y étant connectée au niveau de chacune de leurs extrémités ayant à une valeur calculée par l'équation ci-dessous (2), et une profondeur $D_0$ des rainures (9) ayant une valeur calculée par l'équation ci-dessous (3) :

$$W_{01} = W1 - V1/N1 \qquad (1)$$

où W1 est une valeur de conception de la dimension de largeur des rainures circonférentielles (9a) dans la bande de roulement prévulcanisée (4), V1 s'avérant une variation dans la longueur axiale de la bande de roulement prévulcanisée (4) entre un état plat et un état monté de celle-ci, et N1 étant un nombre de rainures circonférentielles (9a) dans la bande de roulement prévulcanisée (4) ;

$$W_{02} = W2 - V2/N2 \qquad (2) \ ;$$

où W2 est une valeur de conception de la dimension de largeur des rainures latérales (9b) dans la bande de roulement prévulcanisée (4), V2 étant une variation dans la longueur circonférentielle de la bande de roulement prévulcanisée (4) entre un état plat et un état monté de celle-ci, et N2 étant un nombre de rainures latérales (9b) s'étendant le long des rainures circonférentielles (9a) et connectées à celles-ci au niveau de chacune de leurs extrémités dans la bande de roulement prévulcanisée (4) ;

$$D_0 = D + V \qquad (3)$$

où D est une valeur de conception de la dimension de profondeur des rainures (9) dans la bande de roulement prévulcanisée (4) entre un état plat et un état monté de celle - ci, et dans lequel :

plusieurs rainures circonférentielles (9a) s'étendant le long de la circonférence du bandage pneumatique sont formées, les rainures circonférentielles (9a) agencées dans des positions axialement externes du bandage pneumatique présentant une différence supérieure à celle des rainures circonférentielles (9a) agencées dans des positions axialement centrales du bandage pneumatique.

FIG.1(a)  FIG.1 (b)  FIG.1(c)

FIG.2(a)  FIG.2(b)  FIG.2(c)

FIG.3(a)  FIG.3(b)  FIG.3(c)

FIG.4

EP 2 647 493 B1

FIG.5

EP 2 647 493 B1

# FIG.6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8258179 A
- JP 2008120044 A
- JP 2000079641 A
- WO 2010024827 A
- EP 0403443 A
- US 3283795 A
- US 4239075 A
- WO 2010044345 A